# EUROPEAN PATENT APPLICATION

(11) **EP 1 367 583 A2**
(43) Date of publication of application: **03.12.2003**
(21) Application number: 03020256.8
(22) Date of filing: 14.12.1999
(51) Int. Cl.: G11B 20/18

(54) **A method of recording realtime data and a realtime data recording apparatus**

(30) Priority: 17.06.1999 JP 17159099
(62) Divisional of application: 99310044.5
(71) Applicant: MATSUSHITA ELECTRIC INDUSTRIAL CO., LTD., Kadoma-shi, Osaka 571-8501 (JP)
(72) Inventor: Nakashima, Yoshide, Sagamihara-shi Kanagawa-ken 229-0003 (JP)
(74) Representative: Leeming, John Gerard

(57) **Abstract**

Realtime data is recorded on a disc at a unit of cluster including successive sectors. When an error occurs in recording, the realtime data to be recorded in one cluster is relocated at another cluster, wherein successive sectors in each cluster are physically nearly arranged, so that movement of head is reduced when an error occurs and realtime data is recorded without losing the realtime data and without waiting. The area recording medium may be scanned to detect an error in recording during an idle interval. The idle interval is detected in accordance with the request interval of storing or reproducing and writing and reading execution time. A bit map table for storing used status and defect status may be recorded on the area recording medium. Logical sector address in a sector may be converted into a physical sector address such that sectors indicated by the physical sector address converted from the logical sector address in a cluster are physically nearly located on the area recording medium.

## Description

This invention relates to a method of recording realtime data and a realtime data recording apparatus.

A method of recording realtime data is known. Moreover, a method of setting an alternative sector is disclosed in Japanese patent application provisional publication No. 5-28646. Figs. 5A and 5B are illustrations showing such a prior art operation. In this method, when a defective sector 51 is detected in the disc device, the defective sector 51 is skipped and the data is stored but shifted in the sectors ahead and the spare sector except defected sector.

The aim of the present invention is to provide a superior method of recording realtime data and a superior realtime data recording apparatus.

According to the present invention there is provided a method of recording realtime data on an area recording medium, including the steps of: (a) recording the realtime data on the recording medium to locate the realtime data at unit of a cluster including successive sectors physically nearly located each other on the recording medium; (b) detecting errors in recording the realtime data; and (c) in response to the errors, relocating the defective clusters, where the errors are detected, to another new clusters by recording.

In this method, assuming that the error is detected at L^{th} sector at the one sector, L being a natural number, the method further includes the steps of: temporally storing the real time data with a buffer memory to record the real time data on the recording medium. The successive realtime data from the buffer memory is recorded on the area recording medium at the another cluster from the L^{th} sector of the another cluster in response to the error, and the recorded data is read at the one cluster and recorded to the another cluster from the first sector to (L-1)^{th} sector. In the method, the successive sectors in each of the clusters have monotone increasing physical sector numbers.

According to this invention, there is provided a first realtime data recording apparatus including: a storing circuit including an area recording medium for storing realtime data at a unit of cluster including successive sectors which are physically nearly located; a bit map table for defect status and used status of the clusters; a link table for generating a link of the clusters in accordance with the bit map table to provide a file of the realtime data; a file access control circuit for operating the storing circuit to store the realtime data in response to a recording request; and an error detecting circuit responsive to the area storing circuit for detecting an error in storing the realtime data, wherein the file access control circuit relocates the realtime data at a first cluster of the clusters to a second cluster of the clusters which is physically near the first cluster in response to the error detecting circuit in accordance with the bit map table and the link table.

In the first realtime data recording apparatus, the bit map table comprises a semiconductor memory.

In the first realtime data recording apparatus, the area recording medium further stores data of the bit map table.

In the first realtime data recording apparatus, the file access control circuit operates the storing circuit to store the realtime data with logical address of the cluster, the realtime data recording apparatus further including converting circuit for converting the logical address to physical address, the storing circuit storing the realtime data with the physical address of the cluster, the bit map table controlling defect status and used status of the clusters with the logical or physical address of the cluster;

In the first realtime data recording apparatus, the successive sectors in each of the clusters have monotone increasing physical sector numbers.

According to this invention, there is provided a second realtime data recording apparatus including: a storing circuit including an area recording medium for recording and reading realtime data at a unit of cluster including successive sectors at storing and reading data rates, the successive sectors being physically nearly located each other; a bit map table for storing defect status and used status of the clusters; a link table for generating a file and a link of the clusters in accordance with the bit map table; a file access control circuit for operating the storing circuit to record or read the realtime data in response to a request; an idle interval detecting circuit for detecting an idle interval in storing or reproducing the realtime data in accordance with the writing and reading execution time and the request interval; and an error detecting circuit responsive to the idle interval detecting circuit for detecting an error in a cluster. The file access control circuit relocates the realtime data at a first cluster of the clusters to a second cluster of the clusters which is physically near the first cluster in response to the error detecting circuit in accordance with the bit map table and the link table.

In the second realtime data recording apparatus, the file access control circuit may compensate the link table in response to the error detecting circuit in accordance with the bit map table to inhibit to use the cluster in which the error is detected.

In the second method, the successive sectors in each of the clusters have monotonically increasing physical sector numbers.

According to this invention, there is provided a third realtime data recording apparatus including: a disc drive unit including: a storing circuit including an area recording medium for storing realtime data at a unit of cluster and data of a bit map; a converting circuit for converting between logical sector address and physical sector address such that sectors indicated by the physical sector address converted from the logical sector address in a cluster are physically nearly located on the area recording medium; a bit map storing circuit for storing defect status and used status of the sectors with the physical address in the area recording medium as the bit map table; and an error detecting circuit responsive to the storing circuit for detecting an error in storing the realtime data; a link table for generating a link of the clusters in accordance with the bit map table via the converting circuit to provide a file of the realtime data; and a file access control circuit for operating the storing circuit to store the realtime data with the logical sector address in response to a recording request, wherein the file access control circuit relocates the defective first cluster of the clusters to a second cluster of the clusters with the logical sector address with the logical sector address in response to the error detecting circuit in accordance with the bit map table and the link table.

The aim and features of the present invention will become more readily apparent from the following detailed description taken in connection with the accompanying drawings in which:
Figs. 1A and 1B are illustrations of this invention showing an operation of skipping an error occurring cluster on an area recording medium;
Fig. 2 is a block diagram of a realtime data recording apparatus according to a first embodiment;
Fig. 3 is a block diagram of a realtime data recording apparatus of a second embodiment;
Fig. 4 is a block diagram of a realtime data recording apparatus according to a third embodiment; and

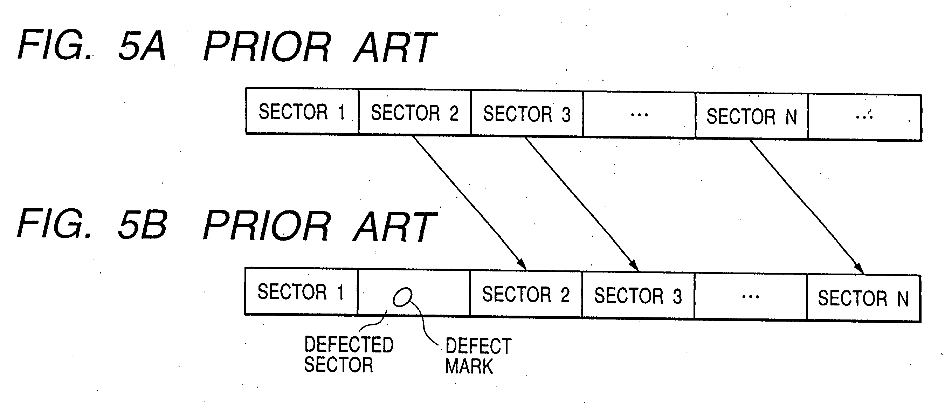

Figs. 5A and 5B are illustrations showing a prior art operation.

The same or corresponding elements or parts are designated with like references throughout the drawings.

Prior to describing embodiments of this invention, a concept of this invention will be described briefly.

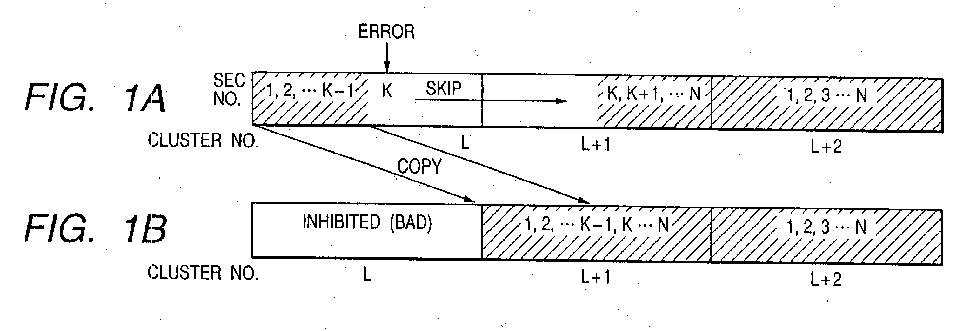

Figs. 1A and 1B are illustrations of this invention showing an operation of skipping an error occurring cluster on an area recording medium.

In Figs. 1A and 1B, each cluster includes N sectors which are physically near each other on the area recording medium. N (cluster size) is a natural number more than one. The area recording medium may comprise a hard disc or an optical disc for example. If a hard disc or an optical disc is used as the area recording medium, logical sectors are successively generated from the peripheral track of the area recording medium and are sectioned every N sectors to provide clusters. The cluster size N or the access size is determined to provide a data rate necessary for recording and reproducing video and audio data with chained clusters (file). If the access size is large, a movement of the head is reduced, so that a high data transfer rate is provided. On the other hand, a small access size results in decrease in data throughput or the available recording capacity. Accordingly, the cluster size N and the access size is determined to provide the data transfer rate required to read and record the audio data and video data. The access size is an arbitrary number of clusters. More specifically, the access size is positive integer times the cluster size N.

In Figs. 1A and 1B, K is a variable indicating relative sector number in a cluster.

### <FIRST EMBODIMENT>

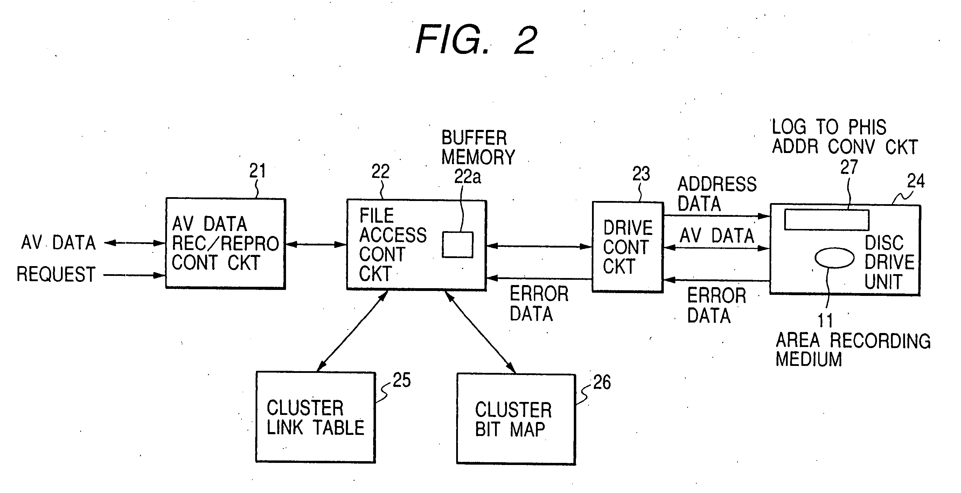

Fig. 2 is a block diagram of a realtime data recording apparatus according to a first embodiment.

The realtime data recording apparatus of the first embodiment includes an audio and video data recording and reproducing control circuit 21, a file access control circuit 22, a drive control circuit 23, a disc drive unit 24, a cluster link table 25, and a cluster bit map 26 which comprises a semiconductor memory.

Audio and video data (AV data) is inputted to the audio and video data recording and reproducing control circuit 21 in a recording mode. The audio and video data recording and reproducing control circuit 21 controls recording in response to a recording request and controls reproducing AV data in response to a reproducing request (a reproducing mode). In the reproducing mode, the audio and video data recording and reproducing control circuit 21 outputs AV data read from the disc drive unit 24.

In the recording mode, the file accessing control circuit 22 generates a file, that is, a chain of clusters in the cluster link table 25 with reference to the cluster bit map 26 to store the audio data and the video data, wherein the chain represents cluster number data of clusters used in the file and the order of the clusters used in the file. The file accessing control circuit 22 registers the chain (link) as a file in the cluster link table 25. The cluster bit map 26 stores using status and inhibit or defect status of clusters.

In response to a recording request, the file access control circuit 22 operates the drive control circuit 23 to record the AV data from the audio and video data recording and reproducing control circuit 21 into the disc drive unit 24. The disc drive unit 24 stores the AV data from the drive control circuit 23 on the area recording medium 11 in accordance with the cluster data from the file access control circuit 22.

During recording, the disc drive unit 24 detects an error in recording. When the disc drive unit 24 detects an error in recording, the disc drive unit 24 informs the file access control circuit 22 via the drive control circuit 23 of the error, that is, error data which includes error status and a logical address of the error sector.

In Fig. 1A, an error occurs at a sector of which sector number is K. Then, the file access control circuit 22 stops writing the AV data from the buffer memory 22a and assigns one more cluster to the chain and stores a defect mark data in the cluster bit map table 26 to inhibit to use the cluster in which the error occurs. The position on the area recording medium 11 of the added cluster in the chain (link) is determined at will. The file access control circuit 22 temporally stores the cluster number where the error occurs, a relative sector number where the error occurs, and the relocated cluster number.

Next, the head is controlled to access the following cluster (L + 1). The file access control circuit 22 reads the buffer memory 22a, and records the realtime data from the sector K of the following cluster (L + 1), when the head reaches the sector K of the following cluster (L + 1).

In an idle interval or after recording, the file access control circuit 22 copies the recorded data on the sector (K = 1) to the sector (K - 1) of the cluster L at the sector (K = 1) to the sector (K - 1) of the cluster (L + 1), so that the realtime data at the cluster L is relocated at the cluster (L + 1). Next, the file access control circuit 22 stores defect mark data on the cluster bit map 26 and erases the cluster number, the relative sector number, and the relocated cluster number which were temporally stored by the file access control circuit 22.

When any other error occurs during the copy of those sectors, mentioned cluster reallocating operation is executed recursively.

As mentioned, realtime data is recorded on the area recording medium 11, at a unit of cluster including N sectors of which physical sector addresses increase in a monotone increasing function. When an error is detected during recording, that is, a defected cluster is detected, a spare cluster is prepared. The remaining realtime data to be recorded at the cluster where the error occurs is recorded at the corresponding sector at the following cluster. The cluster where the error occurs is registered as a defected cluster to-inhibit to use it. During idle interval, or after recording a series of the realtime data, the realtime data recorded at the cluster where the error occurs is copied at the former sectors at the following cluster. This makes it possible to provide the cluster size N or the access size required for a continuous data transfer rate of the realtime data. When an error occurs in recording, increase in sector accessing is suppressed because the realtime data is recorded physically nearly located sectors. That is, relocating the realtime data to be recorded at one sector is performed at a large unit (cluster) to reduce movement of the head, so that data transfer rate necessary for recording and reproducing realtime data is provided irrespective of the number of errors in recording.

### <SECOND EMBODIMENT>

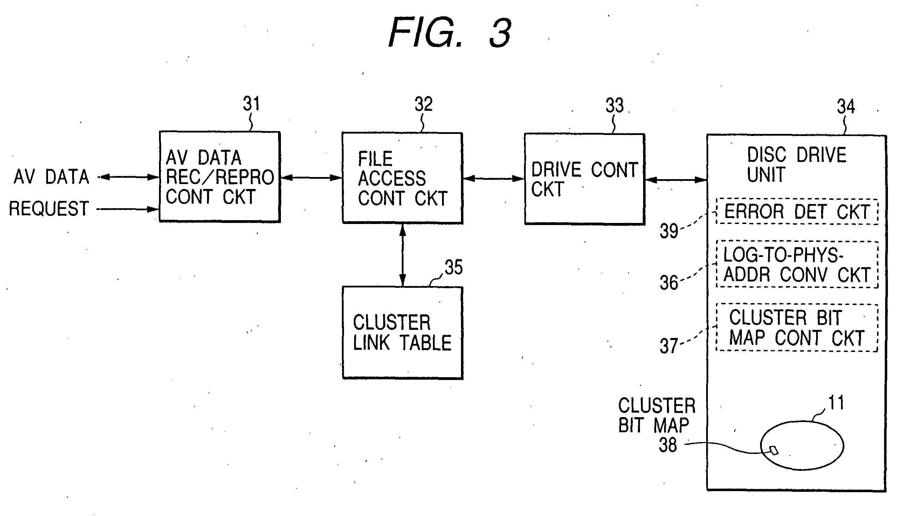

Fig. 3 is a block diagram of a realtime data recording apparatus of a second embodiment.

The realtime data recording apparatus of the second embodiment includes an audio and video data recording and reproducing control circuit 31, a file access control circuit 32, adrive control circuit 33, a disc drive unit 34, and a cluster link table 35. The disc drive unit 34 includes a logical-to-physical-address conversion circuit 36, a cluster bit map control circuit 37, an area recording medium 11, and an error detecting circuit 39. The area recording medium records data of a cluster bit map 38 in addition to the realtime data.

Audio and video data (AV data) is supplied to the audio and video data recording and reproducing control circuit 31 in a recording mode. The audio and video data recording and reproducing control circuit 31 controls recording in response to a recording request and controls reproducing AV data in response to a reproducing request (a reproducing mode). In the reproducing mode, the audio and video data recording and reproducing control circuit 31 outputs AV data read from the disc drive unit 34.

In the recording mode, the file accessing control circuit 32 generates a file, that is, a chain (link) of clusters in the cluster link table 35 with reference to the cluster bit map 38, wherein the chain represents cluster number data of clusters used in the file and the order of the clusters used in the file. The file accessing control circuit 32 registers the chain (link) as a file in the cluster link table 35 with logical sector data. The cluster bit map 38 stores using status and defect status of clusters with physical sector address. The cluster bit map control circuit 37 controls the cluster bit map 38. That is, the cluster bit map control circuit 37 records data of the cluster bit map 38 with physical sector address on the area recording medium 11 to renew the data of the cluster bit map 38.

The logical-to-physical-address converting circuit 36 converts logical sector address from the file access control circuit 32 via the drive control circuit 33 into physical sector address, wherein the sectors converted from the logical sector address in a sector are physically nearly located on the area recording medium 11. The disc drive unit 34 records the realtime data with physical sector address converted from the logical sector address from the file access control circuit 32. The physical sector address from the cluster bit map 38 is also converted into the logical sector address which is sent to the file access control circuit 32.

In response to recording request, the file access control circuit 32 operates the drive control circuit 33 to record the AV data from the audio and video data recording and reproducing control circuit 31 into the disc drive unit 34. The disc drive unit 34 stores the AV data from the drive control circuit 33 on the area recording medium 11 in accordance with the cluster data from the file access control circuit 32.

During recording, the disc drive unit 34 detects an error in recording with the error detection circuit 39. When the error detection circuit 39 detects an error in recording, the disc drive unit 34 informs the file access control circuit 32 via the drive control circuit 33 of the error, that is, error data which includes error status and logical address of the error sector.

In Fig. 1A, it is assumed that an error occurs at a sector of which sector number is K. In response to the error detection, the file access control circuit 32 stops writing the AV data from the buffer memory 32a and assigns one more cluster to the chain and stores a defect mark data in the cluster bit map table 38 to inhibit to use the cluster in which the error occurs. The position on the area recording medium 11 of the added cluster in the chain (link) is determined at will. The file access control circuit 32 temporally stores the cluster number, a relative sector number, and the relocated cluster number.

Next, the head is controlled to access the following cluster (L + 1). The file access control circuit 32 reads the buffer memory 32a and records the realtime data from the sector K of the following cluster (L + 1), when the head reaches the sector K of the following cluster (L + 1).

In an idle interval or after recording, the file access control circuit 32 copies the recorded data on the sector (K = 1) to the sector (K -1) of the cluster L at the sector (K = 1) to the sector (K - 1) of the cluster (L + 1), so that the realtime data at the cluster L is relocated at the cluster (L + 1). Then, the file access control circuit 32 stores defect mark data on the cluster bit map 38 and erases the cluster number, the relative sector number, and the relocated cluster number which were temporally stored by the file access control circuit 32.

When any other error occurs during the copy of those sectors, mentioned cluster reallocating operation is executed recursively.

As mentioned, the cluster bit map control circuit 37 records data of the cluster bit map 38 on the area recording medium 11, so that a semiconductor memory for storing the defect status and used status is not used because the data of cluster bit map 38 is recorded on the area recording medium 11.

### <THIRD EMBODIMENT>

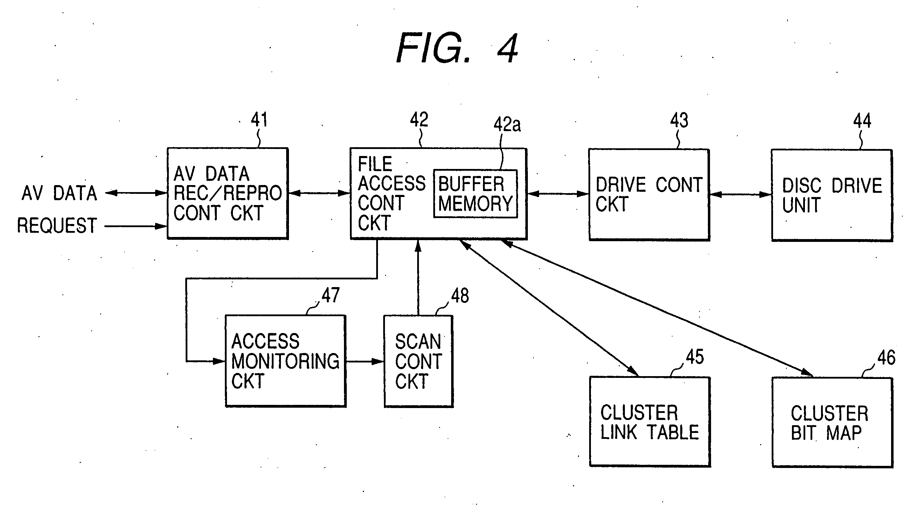

Fig. 4 is a block diagram of a realtime data recording apparatus according to a third embodiment.

The realtime data recording apparatus of the third embodiment includes an audio and video data recording and reproducing control circuit 41, a file access control circuit 42, a drive control circuit 43, a disc drive unit 44, a cluster link table 45, and a cluster bit map 46. The realtime data recording apparatus of the third embodiment further includes an access monitoring circuit 47 and a scan control circuit 48.

Audio and video data (AV data) is supplied to the audio and video data recording and reproducing control circuit 41 in a recording mode. The audio and video data recording and reproducing control circuit 41 controls recording in response to a recording request and controls reproducing AV data in response to a reproducing request (a reproducing mode). In the reproducing mode, the audio and video data recording and reproducing control circuit 41 outputs the AV data read from the disc drive unit 44.

In the recording mode, the file accessing control circuit 42 generates a file, that is, a chain of clusters in the cluster link table 45 with reference to the cluster bit map 46, wherein the chain represents cluster number data of clusters used in the file and the order of the clusters used in the file. The file accessing control circuit 42 registers the chain (link) as a file in the cluster link table 45. The cluster bit map 46 stores using status and inhibitive and defect status of clusters.

In response to a recording request, the file access control circuit 42 operates the drive control circuit 43 to write the AV data from the audio and video data recording and reproducing control circuit 41 into the disc drive unit 44. The disc drive unit 44 stores the AV data from the drive control circuit 43 on the area recording medium 11 therein in accordance with the cluster data from the file access control circuit 42.

During recording, the access monitoring circuit 47 detects an idle interval in accordance with the interval of the request inputted to the audio and video data recording and reproducing control circuit 41 and with command execution time of writing and reading the realtime data. When there is an idle interval during recording the realtime data at one cluster (no recording or reproducing request or the data transfer rate for recording or reproducing is higher than data amount to be processed at that instance), the access monitoring circuit 47 operates the scan control circuit 48. The scan control circuit 48 successively scans the sectors of the cluster on the disc drive unit 44 to read the recorded realtime data or verifies the recorded realtime data with the realtime data in the buffer or check error detection codes of the sectors by controlling the file access control circuit 42.

When there is an error at the sector K as shown in Fig. 1A, the file access control circuit 42 stops writing the AV data from the buffer memory 42a and assigns one more cluster to the chain and stores defect mark data in the cluster bit map 46 to inhibit to use the cluster in which the error occurs. That is, the file access control circuit 42 compensates the link table in response to the error detecting circuit in accordance with the bit map 46 to inhibit to use'the cluster in which the error is detected. The position in the disc drive unit 11 of the added cluster in the chain (link) is determined at will. The file access control circuit 42 temporally stores the cluster number, a relative sector number, and the relocated cluster number.

Next, the head is controlled to access the following cluster (L + 1). The file access control circuit 42 reads the buffer memory 42a, and starts recording the realtime data from the sector K of the following cluster (L + 1), when the head reaches the sector K of the following cluster (L + 1).

In an idle interval or after recording the file, the file access control circuit 42 copies the recorded data on the sector (K = 1) to the sector (K - 1) of the cluster L at the sector (K = 1) to the sector (K - 1) of the cluster (L + 1), so that the realtime data at the cluster L is relocated at the cluster (L + 1). Then, the file access control circuit 42 stores defect mark data on the cluster bit map 46 and erases the cluster number, the relative sector number, and-the relocated cluster number which were temporally stored by the file access control circuit 42.

When any other error occurs during the copy of those sectors, mentioned cluster reallocating operation is executed recursively.

As mentioned, realtime data is recorded on a disc at a unit of cluster including successive sectors. When an error occurs in recording, the realtime data to be recorded in one cluster is relocated at another cluster, wherein successive sectors in each cluster are physically nearly arranged, so that movement of head is reduced when an error occurs and realtime data is recorded without losing the realtime data. The area recording medium may be scanned to detect an error in recording during an idle interval. The idle interval is detected in accordance with the request interval of storing and reproducing and with writing and reading execution time. A bit map table for storing used status and defect status may be recorded on the area recording medium. Logical sector address in a sector may be converted into a physical sector address such that sectors indicated by the physical sector address converted from the logical sector address in a cluster are physically nearly located on the area recording medium.

Accordingly, though an error occurs during recording the realtime data, the realtime data is continuously recorded on an area recording medium by relocating the realtime data to be recorded at the cluster at the following cluster.

## Claims

1. A realtime data recording apparatus comprising:
storing means including an area recording medium for storing realtime data at a unit of cluster including successive sectors which are physically nearly located;
a bit map table for defect status and used status in said clusters;
a link table for generating a link of said clusters in accordance with said bit map table to provide a file of said realtime data;
file access control means for operating said storing means to store said realtime data in response to a recording request;
error detecting means responsive to said area storing means for detecting an error in storing said realtime data, wherein said file access control means relocates said realtime data at a first cluster of said clusters on a second cluster of said clusters which is physically near said first cluster in response to said error detecting means in accordance with said bit map table and said link table; and
wherein said file access control means operates said storing means to store said realtime data with logical address of said cluster, said realtime data recording apparatus further including converting means for converting said logical address to physical address, said storing means storing said realtime data with said physical address of said cluster, said bit map table controlling defect status and used status of said clusters with said physical address of said cluster.

2. A realtime data recording apparatus according to claim 1, wherein said bit map table comprises a semiconductor memory.

3. A realtime data recording apparatus according to claim 1 or 2, wherein said area recording medium further stores data of said bit map table.

4. A realtime data recording apparatus according to claim 1, 2 or 3, wherein said successive sectors in each of said clusters have monotonically increasing physical sector numbers.
